# EUROPEAN PATENT APPLICATION

(11) **EP 1 531 584 A1**
(43) Date of publication of application: **18.05.2005**
(21) Application number: 04021578.2
(22) Date of filing: 10.09.2004
(51) Int. Cl.: H04L 12/56

(54) **Link layer based network sharing**

(30) Priority: 11.11.2003 EP 03026002; 31.12.2003 US 748674
(71) Applicant: Nokia Corporation, 02150 Espoo (FI)
(72) Inventor: Major, Tamas, 40239 Düsseldorf (DE); Aalto, Mika, 02660 Espoo (FI)
(74) Representative: Eisenführ, Speiser & Partner

(57) **Abstract**

The present invention relates to a shared network system, sharing method and router device for routing data packets in an IP transport network. Separate dedicated link layers having predetermined dedicated link capacities are allocated for transmitting and/or receiving data packets, wherein the dedicated link layers share an available capacity of a real link layer or physical layer. Thereby, multiple virtual networks assigned to customers can be operated in parallel and managed completely independently. Furthermore, tunneling mechanisms with their associated transmission overhead are no longer required.

## Description

### FIELD OF THE INVENTION

The present invention relates to a shared network system using IP transport, such as an IP (Internet Protocol) based radio access network (IP-RAN), to a sharing method and to a router device for routing data packets in the IP transport network.

### BACKGROUND OF THE INVENTION

In order to reduce costs, network operators may want to share active infrastructure, e.g., transmission links, routers etc.. As a possible solution, it has been proposed to emulate (private) virtual networks within another, generally more public, physical network. Such an emulated network is referred to as a virtual private routed network (VPRN). Because a VPRN "piggybacks" on a separate and generally shared network, it can be more cost effective than a separate physical network. At the same time, there is significant functional separation between the VPRN and the underlying network, so that the VPRN largely behaves like a stand-alone network, with attendant benefits in security, network management, and other aspects of network operation.

In a typical VPRN configuration, IP technology of the same type as used in the Internet is employed, wherein a mesh of "tunnels", or dedicated virtual channels, is established among a set of router nodes in the Internet. The router nodes encapsulate VPRN traffic in a format required by the tunnels, transmit encapsulated traffic to other router nodes using the Internet address space and routing protocols, decapsulate received traffic to recover the original VPRN traffic, and then use the VPRN routing protocols and address space for forwarding the traffic to other nodes in the VPRN outside the Internet.

Documents US2002/0097730A and US2002/009984A disclose VPRNs which can be used separately and independent inside a network node. Several virtual routers (VARs) associated with respective customers are arranged in the network node and connected to the respective customers' access links. A provider virtual backbone router (VBR) is connected to backbone links of a wide-area routed network and uses IP addresses from the address space of the wide-area routed network, which is separated from the address spaces of the VPRNs. The VBR provides a tunneling service to the VARs, which is used in constructing the VPRNs, while an RSVP signaling is used to create tunnels within the wide-area routed network so as to provide connections to the VARs. Different VARs can use overlapping sets of addresses, i.e. the same address may appear in different sets.

However, VPRNs or Virtual Private Networks (VPNs) are based on the usage of tunnels which increase the transport overhead due to additional IP headers used for encapsulation. In networks like IP-RAN, for example, this is not desirable due to the fact that the average small payload size leads to large transport overheads which are not acceptable by operators. Moreover, tunneling leads to the drawback that in some cases, e.g. large IP packets, an additional fragmentation is needed to enable transport of IP packets with the required tunneling header over a link. This would require additional processing time and thus delay and increased processing and memory demands for the routers.

### SUMMARY OF THE INVENTION

It is therefore an object of the present invention to provide a mechanism by means of which independent virtual transport networks can be achieved without increasing transport overhead.

This object is achieved by a router device for routing data packets in a packet data network, said router device comprising at least two virtual router means to which separate dedicated link layers having predetermined dedicated link capacities are allocated for transmitting and/or receiving data packets to and/or from said packet data network, wherein said dedicated link layers share an available capacity of the real link layer or physical layer.

Furthermore, the above object is achieved by a shared network system comprising a plurality of such router devices wherein first ones of said virtual router means of said plurality of router devices are connected via their dedicated. link layers to form a first network, and wherein second ones of said virtual router means of said plurality of router devices are connected via their dedicated link layers to form a separate second network.

Finally, the above object is achieved by a method of sharing network resources in a packet data network, said method comprising the steps of:
- separating link layers into at least first and second separated link layers;
- allocating predetermined portions of an available link layer capacity to said first and second separated link layers; and
- using said first separated link layers for data transmission in a first network, and said second separated link layers for data transmission in a second network.

Accordingly, multiple virtual networks assigned to customers can be operated in parallel and managed completely independently via shared link layers, while conventional tunneling mechanisms with their associated transmission overhead are no longer required. The proposed solution enables sharing of IP network devices between multiple customers/operators, so that common infrastructure like routers and transport equipment can be shared. Multiple virtual networks assigned to the customers can be operated in parallel and managed completely independently by their customers using the separated virtual router means with their dedicated virtual link layers. Each virtual network thus contains virtual routers connected via at least one link layer. One or multiple virtual routers are running within a (physical) router network element.

The dedicated link capacities may be imposed by the dedicated link layers, or as an alternative, dedicated link capacities may be limited arbitrarily by respective interface means of the virtual router means. The link layers may thus have a fixed capacity directly imposed by the link layer, e.g. CBR (Constant Bit Rate) in case of ATM (Asynchronous Transfer Mode), or being limited arbitrarily by a maximum rate to be used by the virtual router's IP interface on that link (e.g. VLAN (Virtual Local Area Network) in case of Ethernet). Each physical link layer may thus run multiple link layers or virtual link layers wherein all links or virtual links and IP interfaces share the available capacity of the physical layer.

Each customer may have a fixed share of the available bandwidth. Individual address areas or dedicated logical links distinguish between the different virtual networks, which share the physical entities. Optionally, a separate dedicated address space may be allocated to each virtual router means. Thereby, each customer will get a dedicated address area, which will be used only by its own traffic. In contrast to a Virtual Private Network (VPN) type tunneling, this solution does not require additional headers nor does it increase the transport overhead. The capacity of the first and second separated link layers may be set in a predetermined manner or in an arbitrary manner depending on the used link layer.

The proposed router device can be embedded in a base station device, such as a base transceiver station (BTs), or can be implemented as a stand-alone router e.g. in an IP based radio access network (IP-RAN) allowing to share transmission capacity and/or transmission sites by multiple mobile network operators, so as to provide a solution to the overhead problem emerging in case of shared IP based transport networks. Clear advantages are thereby achieved in terms of saving transmission bandwidth for operators.

### BRIEF DESCRIPTION OF THE DRAWINGS

In the following, the present invention will be described on the basis of an embodiment with reference to the accompanying drawings in which:
Fig. 1 shows a schematic diagram indicating a network system with a shared RAN; and
Fig. 2 shows a schematic diagram of a shared network architecture according to the embodiment.

### DESCRIPTION OF THE PREFERRED EMBODIMENTS

The embodiment of the present invention will now be described on the basis of an IP-RAN network architecture.

According to the described embodiment, shared usage of an IP network, e.g. IP-RAN network, is enabled by multiple customers, e.g. radio network operators, so that common infrastructure, such as routers, transmission links etc., can be shared.

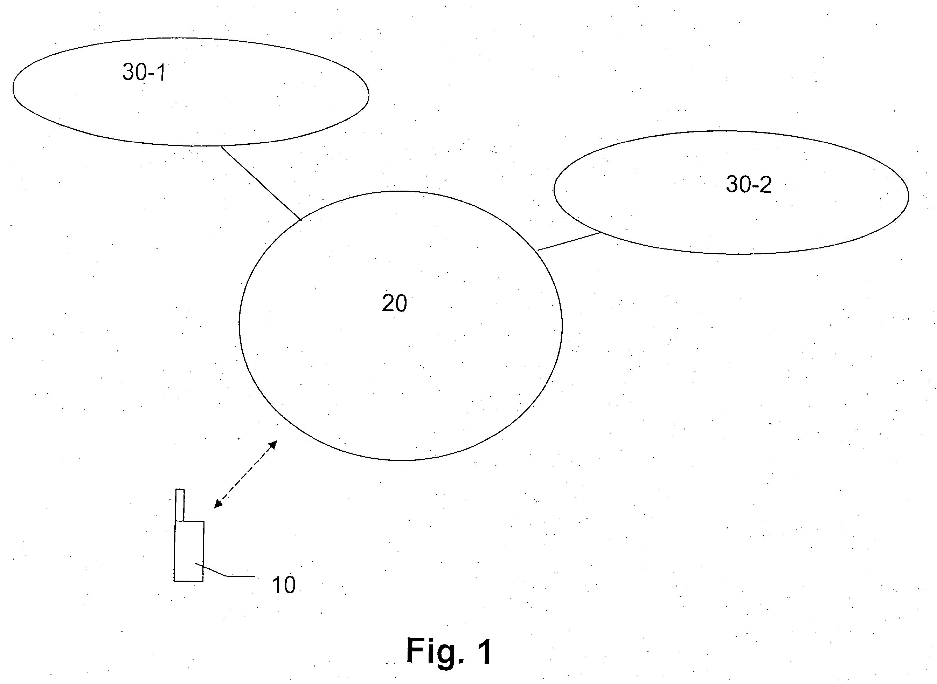

Fig. 1 shows a schematic diagram of a network system with a shared IP-RAN 20 to which multiple core networks 30-1 and 30-2 are connected, and which provides wireless access for a mobile terminal or user equipment (UE) 10 to the core networks 30-1 and 30-2. In the present example, the two core networks 30-1 and 30-2 are operated by different mobile operators. Of course, the IP-RAN 20 may be shared by more than two core networks.

To reduce design complexity, network designer organize protocols - and the network hardware and software that implements the protocols - in layers. With a layered protocol architecture, each protocol belongs to one of the layers. A protocol of an individual layer is distributed among network entities which implement that protocol. In other words, there is a piece of protocol of the individual layer in each of the network entities. These protocol pieces communicate with each other by exchanging layer messages, called protocol data units. When taken together, the protocols of the various layers are called the protocol stack.

The Internet protocol stack consists of five layers: the physical, link, network, transport, and application layers. The network layer routes a data packet through a series of packet switches, called routers in the Internet, between the source and destination. To move a packet from one node, e.g. host or packet switch, to the next node in the route, the network layer must rely on the service of the link layer. In particular, at each node IP passes the packet data unit (which is called datagram in the link layer) to the link layer, which delivers the packet data unit to the next node along the route. At this next node, the link layer passes the IP packet data unit to the network layer. Examples of link layers include Ethernet, PPP (Point-to-Point Protocol), and to some extent also ATM and Frame Relay. As the packet data units typically need to traverse several links to travel from source to destination, a packet data unit may be handled by different link-layer protocols at different links along its route. IP will receive a different service from each of the different link-layer protocols.

While the link layer is adapted to move entire frames from one network element or node to an adjacent network element or node, the physical layer serves to move the individual bits within the frame from one node to the next. The protocols in this layer are again link dependent, and further depend on the actual transmission medium of the link. Depending on the actual transmission medium, a bit is moved across the link in a different way.

In the embodiment, a "virtual" network A, B consisting of virtual routers is set up for each operator of the core networks 30-1 and 30-2. Virtual routers are an emulation of a physical router. A router node can have multiple virtual routers, each of them running completely independently. Virtual routers belonging to the same operator network are connected via virtual link layers each having a fixed capacity. This capacity value may be imposed directly by the virtual link layer or may be limited arbitrarily by a maximum rate to be used by the virtual router's IP interface on that link. A link layer can thus run multiple virtual link layers where the sum of the virtual links' capacity or IP interface's maximum rate does not exceed the available capacity of the real link layer or the physical layer below.

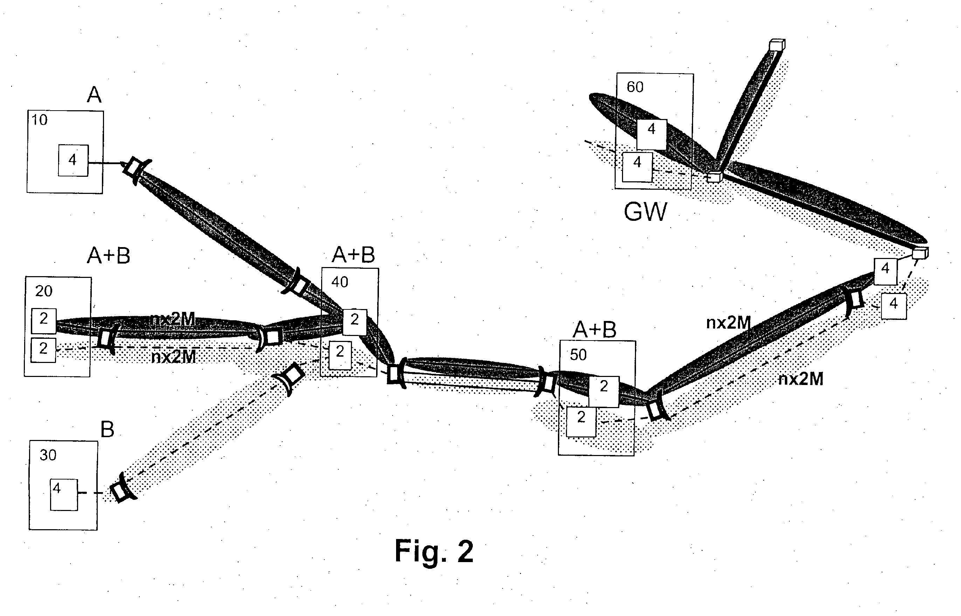

Fig. 2 shows a schematic diagram of an IP-RAN network architecture according to the embodiment, as may be implemented in the IP-RAN 20 of Fig. 1. IP base station devices 10, 20, 30 are radio-connected via first and second shared router devices 40, 50 to conventional separated router devices 4. The conventional separated router devices 4 provide connections via a wired network to a gateway device 60 comprising other conventional separated router devices 4. The wireless connections are established by microwave radio links. As can be gathered from the figure, several transmission links and network devices are shared by both networks A and B. The capital letters at the network nodes in the figure indicate the virtual network(s) which use the respective network node, e.g., the first and second shared router devices 40, 50 and the shared IP base station device 20 arranged in the middle are used by both virtual networks A and B. To achieve this, the shared IP base station device 20 comprises two virtual routers 2, and the shared router devices 40, 50 each comprise two virtual routers 2. These virtual routers 2 use their dedicated link layers to set up virtual links to other virtual routers of the concerned virtual network or to conventional routers. The operators' networks A and B can thus be regarded as two virtual networks being operated in parallel but independently, as the address ranges and/or virtual link layers are completely separated.

In the example of the figure, the connection links between the virtual routers 2 of the shared IP base station device 20 and the virtual routers 2 of the first shared router device 40 can be established using physically separated microwave radio links, e.g. different E1 links. Similar physically separated microwave radio connection links can be used to establish connection links between the virtual routers 2 of the second shared router device 50 and the conventional separated routers 4. The connection links between the first and second shared router devices 40, 50 are established by virtual link layers with fixed bandwidth share per operator. Thus, the microwave radio links are depicted as separate links. Other shared connection links can be established in the wired network shown in the upper right portion of the figure, which can be separated via TDM, ATM, PPP, or VLAN, while a fixed bandwidth share is allocated to the operators of the virtual networks A and B. Hence, also these wired connection links are depicted as separate links. Packet data routed in this wired network can be forwarded via physically separated wired links to the respective separated routers 4 provided in the gateway device 60, to thereby provide links to other external networks. The other IP base station devices 10, 30 are each allocated to one of the virtual networks A and B and are thus not shared by the operators.

Each shared router is running multiple virtual routers 2 or virtual router entities in each shared physical router network element. Each operator has its virtual router entity allocated. The interfaces of an operator-assigned virtual router entity are running on link layers, which are used solely by that operator. If the used link and physical layer types combination do not provide directly multiple link layer connections per physical link, then the link layer can be split up into multiple virtual links.

On every virtual router the maximum transmit rate per IP interface, and therefore per operator, is fixed. The rates are set either arbitrarily as share of the available link capacity (e.g. Ethernet) or depend on the rate provided by the related link layer (e.g. ATM connections with CBR). The sum of all transmission rates must not exceed the physical link capacity
It is to be noted that the present invention is not restricted to the above embodiment but can be implemented in any packet data to thereby provide network sharing by different customers or operators without requiring any tunneling mechanism. In particular, the invention is not restricted to IP-based networks. Furthermore, more than two virtual networks may be established, wherein a corresponding number of virtual routers or virtual router entities is provided in the shared routers. The embodiment may thus vary within the scope of the attached claims.

## Claims

1. A router device for routing data packets in a packet data network, said router device (20, 40, 50) comprising at least two virtual router means (2) to which separate dedicated link layers having predetermined dedicated link capacities are allocated for transmitting and/or receiving data packets to and/or from said packet data network, wherein said dedicated link layers share an available capacity of the real link layer or physical layer.

2. A device according to claim 1, wherein said dedicated link capacities are imposed by said dedicated link layers.

3. A device according to claim 1, wherein said dedicated link capacities are limited arbitrarily by respective interface means of said virtual router means (2).

4. A device according to any one of the preceding claims, wherein a separate dedicated address space is allocated to each virtual router means (2).

5. A device according to any one of the preceding claims, wherein said device is a base station device (20) or a stand-alone router (40, 50).

6. A shared network system comprising a plurality of router devices (20, 40, 50) according to any one of claims 1 to 5, wherein first ones of said virtual router means (2) of said plurality of router devices are connected via their dedicated link layers to form a first virtual network, and wherein at least second ones of said virtual router means (2) of said plurality of router devices are connected via their dedicated link layers to form at least a separate second virtual network.

7. A device according to claim 5 or 6, wherein said first ones and said at least second ones of said virtual router means (2) are configured to be used by different operators.

8. A method of sharing network resources in a packet data network, said method comprising the steps of:
a) separating link layers into at least first and second separated link layers;
b) allocating predetermined portions of an available link layer capacity to said first and second separated link layers; and
c) using said first separated link layers for data transmission in a first virtual network, and said second separated link layers for data transmission in a second virtual network.

9. A method according to claim 8, further comprising the step of setting the capacity of said first and second link layers in a predetermined manner or in an arbitrary manner depending on the used link layer.
